(19) Europäisches Patentamt
European Patent Office
Office européen des brevets

(11) EP 2 771 404 B1

(12) **EUROPÄISCHE PATENTSCHRIFT**

(45) Veröffentlichungstag und Bekanntmachung des Hinweises auf die Patenterteilung:
**22.03.2017 Patentblatt 2017/12**

(21) Anmeldenummer: **12778103.7**

(22) Anmeldetag: **23.10.2012**

(51) Int Cl.:
***C08L 67/02*** *(2006.01)* ***C08L 69/00*** *(2006.01)*
***C08K 3/24*** *(2006.01)* ***C08K 3/36*** *(2006.01)*

(86) Internationale Anmeldenummer:
**PCT/EP2012/070983**

(87) Internationale Veröffentlichungsnummer:
**WO 2013/060687 (02.05.2013 Gazette 2013/18)**

# (54) STABILISIERTE POLYCARBONATZUSAMMENSETZUNGEN MIT ABMISCHUNGEN AUS KIESELSÄURE UND EINER ANORGANISCHEN SÄURE

STABILISED POLYCARBONATE COMPOUNDS WITH MIXTURES OF SILICIC ACIDS AND AN ANORGANIC ACID

COMPOSITIONS À BASE DE POLYCARBONATE STABILISÉES ET DOTÉES DE MÉLANGES CONSTITUÉS D'ACIDE SILIQUE ET D'UN ACIDE ANORGANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2011 EP 11186664**

(43) Veröffentlichungstag der Anmeldung:
**03.09.2014 Patentblatt 2014/36**

(73) Patentinhaber: **Covestro Deutschland AG**
**51373 Leverkusen (DE)**

(72) Erfinder: **SEIDEL, Andreas**
**41542 Dormagen (DE)**

(74) Vertreter: **Levpat**
**c/o Covestro AG**
**Gebäude 4825**
**51365 Leverkusen (DE)**

(56) Entgegenhaltungen:
**EP-A1- 0 899 302**
**WO-A1-2008/122359**
**DE-A1- 19 951 879**

EP 2 771 404 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Polycarbonat-Zusammensetzungen sowie ihre Herstellung und Verwendung, wobei die Polycarbonat-Zusammensetzungen einen Adsorber oder Absorber und eine Säure enthalten.

Die vorliegende Erfindung betrifft ferner ein Compoundierverfahren zur Herstellung von stabilisierten Polycarbonat-Zusammensetzungen enthaltend basisch wirkende Bestandteile unter Verwendung von auf einem Adsorber oder Absorber aufgezogenen Säuren. Das Aufziehen der Säure auf den Adsorber oder Absorber erfolgt beispielsweise und bevorzugt durch Abmischung des Adsorbers oder Absorbers mit einer den Adsorber oder Absorber benetzenden Säure oder alternativ mit einer den Adsorber oder Absorber benetzenden Lösung einer Säure. Diese Abmischungen sind in bevorzugter Ausführungsform pulverförmig und rieselfähig.

Die erfindungsgemäßen beziehungsweise gemäß dem erfindungsgemäßen Compoundierungsverfahren hergestellten Zusammensetzungen weisen eine verbesserte Verarbeitungsstabilität, insbesondere eine verbesserte Stabilität des Glanzgrades unter Variation der Verarbeitungstemperatur, sowie eine erhöhte Thermostabilität und einen guten Rohton auf.

Als Compoundieren bezeichnet man in der Polymeraufbereitung die Herstellung einer fertigen Kunststoff-Formmasse, dem Compound, aus gegebenenfalls mehreren polymeren Rohstoffen unter gegebenenfalls Zugabe von Polymeradditiven wie beispielsweise Füll- und Verstärkungsstoffe, Haftvermittlern, Gleitmittel, Stabilisatoren etc.. Die Compoundierung erfolgt beispielsweise in Knetern oder Extrudern und umfasst die Verfahrensoperationen Fördern, Aufschmelzen, Dispergieren, Mischen, Entgasen und Druckaufbau. An die Compoundierung schließt sich in der Regel eine durch Abkühlung herbeigeführte Erstarrung des Compounds sowie dessen Granulierung an.

Schlagzähmodifikatoren, die bei der Herstellung/Compoundierung von Polycarbonat-Zusammensetzungen verwendet werden, enthalten herstellungsbedingt oft basische Verunreinigungen. Sie enthalten beispielsweise Restmengen basisch wirkender Substanzen, welche als Polymerisationshilfsstoffe, beispielsweise als Emulgatoren in der Emulsionspolymerisation oder in den Aufarbeitungsprozessen als Hilfsstoffe eingesetzt werden. Zum Teil werden ABS-Polymerisaten auch gezielt basisch wirkende Additive zugesetzt (z.B. Gleit- und Entformungsmittel). Ebenso weisen viele handelsüblichen Füllstoffe wie beispielsweise Talk oder andere handelsübliche Polymeradditive wie beispielsweise einige Antistatika (beispielsweise Polyetheramide), Gleitmittel (beispielsweise Ethylenbisstearamid), Stabilisatoren (beispielsweise als Lichtschutzmittel zum Einsatz kommende Benzotriazole), Pigmente (beispielsweise Titandioxid), Stickstoff-enthaltende organische Farbstoffe (beispielsweise Azoverbindungen oder Pyrazolone) und Stickstoff-enthaltende Flammschutzmittel (beispielsweise Phosphonatamine) ein alkalisches Verhalten auf oder aber enthalten basische Verunreinigungen.

Diese alkalisch wirkenden Additive oder Verunreinigungen können bei hohen Temperaturen, wie sie typischerweise bei der Herstellung und Verarbeitung der Polycarbonat-Formmassen auftreten, das Polycarbonat katalytisch zersetzen. Ein solcher Polycarbonatabbau äußert sich oft in einer Schädigung der Eigenschaften der Formmassen, insbesondere der mechanischen Kenngrößen wie Duktilität und Zug-Dehnungseigenschaften, aber auch durch Molekulargewichtsabbau und Oberflächenveränderungen. Dadurch wird die Auswahl der möglichen Einsatzstoffe für solche Polycarbonat-Zusammensetzungen sehr stark eingeschränkt.

Während aus dem Stand der Technik bekannt ist, Polycarbonat-Zusammensetzungen zur Neutralisation der schädlichen Wirkung alkalisch wirkender Additive oder Verunreinigungen saure Verbindungen wie beispielsweise Zitronensäure, zuzusetzen, führt der Zusatz dieser Säuren aber häufig zu nachteiligen Eigenschaften bei den Polycarbonat-Zusammensetzungen wie beispielsweise Schlierenbildung an der Oberfläche, starken Molekulargewichtsabbau und/oder Verschlechterung des Rohtons.

EP-A 576 950 A1 und WO-A 2007/065579 beschreiben basische Verunreinigungen enthaltende Zusammensetzungen enthaltend Polycarbonat und Acrylnitril-Butadien-Styrol-(ABS)-Polymere, die mit multifunktionellen organischen Carbonsäuren stabilisiert werden. Solche Zusammensetzungen weisen eine gute Thermostabilität im Hinblick auf die Integrität des Molekulargewichts der Polycarbonatkomponente bei hohen Verarbeitungstemperaturen auf, neigen jedoch im Spritzguss zur Ausbildung von Oberflächendefekten (Schlieren) auf den aus ihnen hergestellten Formteilen.

US2006/0287422 beschreibt thermoplastische Zusammensetzungen enthaltend Polycarbonat, einen Schlagzähmodifikator, optional ein Vinylcopolymer, einen Mineralfüllstoff und eine Säure oder ein saures Salz, mit verbesserten mechanischen Eigenschaften und reduzierter Neigung zum thermischen Abbau. Die Anmeldung offenbart als bevorzugte Säuren auch phosphorbasierende Verbindungen der allgemeinen Formel $H_mP_tO_n$, im Speziellen unter anderem auch Phosphorsäure. Die Anmeldung offenbart, dass die erfindungsgemäßen Zusammensetzungen mit im Stand der Technik beschriebenen Verfahren hergestellt werden können.

In der WO-A 2010/063381 werden schlagzähmodifizierte Polycarbonatzusammensetzungen mit verbesserter Kombination aus Hydrolyse- und Verarbeitungsstabilität beschrieben enthaltend Polycarbonat, ein basisch verunreinigtes Emulsionspfropfpolymerisat und eine saure Phosphorverbindung mit mindestens einer P-OH-Funktionalität. Als saure Phosphorverbindungen werden sowohl spezielle cyclische Organophosphitverbindungen als auch anorganische oder organische Phophorverbindungen wie beispielsweise Phosphorsäure oder Phosphorsäureester beschrieben.

Die EP 2 257 590 A1 offenbart Polycarbonat-Zusammensetzungen mit verbesserter Kombination aus Rohton, Hydrolyse- und Verarbeitungsstabilität enthaltend Polycarbonat, kautschukmodifiziertes Pfropfpolymerisat enthaltend herstellungsbedingte Rückstände eines Fettsäuresalz-Emulgators, wobei das Pfropfpolymerisat in wässriger Dispersion einen pH-Wert von größer als 7 aufweist, und ein saures Additiv. Als saure Additiv werden in dieser Anmeldung hydroxyfunktionalisierte Mono- und Poly-Carbonsäuren sowie Phosphorsäure offenbart.

Die EP 1 141 107 A1 offenbart Polycarbonat-Zusammensetzungen mit verbesserter Wärmeformbeständigkeit, Reißdehnung und Spannungsrißbeständigkeit enthaltend Polycarbonat, Pfropfpolymerisat, optional Vinylcopolymerisat und 0,1 bis 30 Gew.-Teile einer Siliziumverbindung wie beispielsweise Siliziumdioxid mit einem mittleren Teilchendurchmesser von 3 bis 50 nm. Über den Einsatz von Säuren in den Zusammensetzungen schweigt diese Anmeldung.

EP 0899302 A1 offenbart wetterfeste Zusammensetzungen aus Polycarbonat, cycloaliphatischen Polyesterharzen, zumindest einer Komponente ausgewählt aus Benzotriazol, Benzophenon und Triazin-basiertem UV Absorber und einem Katalysator-Quencher. Die Einarbeitung des cycloaliphatischen Polyesterharz und der Komponente ausgewählt aus Benzotriazol, Benzophenon und Triazin-basiertem UV Absorber zeigt eine synergistische Wirkung, wodurch sich unerwartet ein verbesserter Schutz der Polycarbonat-Zusammensetzungen hinsichtlich Photostabilität ergibt.

WO 2008/122359 A1 offenbart Zusammensetzungen enthaltend A) Polycarbonat, Polyestercarbonat oder eine Mischung daraus, B) Pfropfpolymerisat, C) Talk, D) eine Brönstedt-Säure und E) mindestens ein Polymeradditiv, das auch ein Stabilisator sein kann. Die Zusammensetzungen zeichnen sich durch gute Duktilität, Wärmeformbeständigkeit und thermische Stabilität bei der Compoundierung und Verarbeitung aus.

Keine der genannten Stellen beschreibt jedoch die Zusammensetzungen der vorliegenden Erfindung oder das Verfahren zu deren Herstellung

Aufgabe der vorliegenden Erfindung war es somit, Polycarbonat-Zusammensetzungen sowie ein Verfahren zu deren Herstellung bereitzustellen, die die vorgenannten Nachteile nicht aufweisen und somit insbesondere eine verbesserte Verarbeitungsstabilität, gemessen an der Stabilität des Glanzgrades unter Variation der Verarbeitungstemperatur, eine erhöhte Thermostabilität und einen guten Rohton zeigen.

Überraschenderweise wurde gefunden, dass Polymerzusammensetzungen enthaltend

A 10 bis 100 Gew.-Teile, bevorzugt 30 bis 95 Gew.-Teile, weiter bevorzugt 40 bis 80 Gew.-Teile, besonders bevorzugt 55 bis 65 Gew.-Teile, jeweils bezogen auf die Summe der Komponenten A+B, mindestens eines Polymers ausgewählt aus der Gruppe der aromatischen Polycarbonate, aromatischen Polyestercarbonate und aromatischen Polyester,

B 0 bis 90 Gew.-Teile, bevorzugt 5 bis 70 Gew.-Teile, weiter bevorzugt 20 bis 60 Gew.-Teile, besonders bevorzugt 35 bis 45 Gew.-Teile, jeweils bezogen auf die Summe der Komponenten A+B, mindestens eines gegebenenfalls kautschukmodifizierten Vinyl(co)polymerisats,

C 0,00025 bis 0,080 Gew.-Teile, bevorzugt 0,001 bis 0,050 Gew.-Teile, besonders bevorzugt 0,001 bis 0,010 Gew.-Teile, jeweils bezogen auf die Summe der Komponenten A+B, mindestens eines anorganischen Adsorbers, bzw. Absorbers ausgewählt aus der Gruppe, die thermisch inerte anorganische Materialien, sowie Oxide, Mischoxide, Silikate, Sulfide, Nitride von Metallen oder Übergangsmetallen sowie Mischungen daraus umfasst,

D 0,001 bis 0,300 Gew.-Teile, bevorzugt 0,005 bis 0,200 Gew.-Teile, besonders bevorzugt 0,005 bis 0,05 Gew.-Teile, jeweils bezogen auf die Summe der Komponenten A+B, mindestens einer Brönsted-sauren Verbindung,

E 0,1 bis 40,0 Gew.-Teile, bevorzugt 0,2 bis 10,0 Gew.-Teile, besonders bevorzugt 0,3 bis 2,0 Gew.-Teile, jeweils bezogen auf die Summe der Komponenten A+B, mindestens eines Zusatzstoffes verschieden von den Komponenten C, D und F,

F 0 bis 50 Gew.-Teile, bevorzugt 3 bis 40 Gew.-Teile, besonders bevorzugt 8 bis 30 Gew.-Teile, jeweils bezogen auf die Summe der Komponenten A+B, Talk,

wobei die Summe der Gewichtsteile der Komponenten A+B in der Zusammensetzung 100 ergibt, das gewünschte Eigenschaftsprofil aufweisen.

Vorzugsweise wird die Komponente D bezogen auf die Summe der Komponenten C und D eingesetzt in einem Anteil von mindestens 25 Gew.-Teilen, weiter bevorzugt von mindestens 50 Gew.-Teilen, insbesondere von mindestens 60 Gew.-Teilen.

Die Brönsted-saure Verbindung gemäß Komponente D wird bei der Herstellung der erfindungsgemäßen Zusammensetzungen in bevorzugter Ausführungsform auf den Adsorber oder Absorber gemäß Komponente C aufgezogen. Dieses erfolgt in der Regel durch physikalische Abmischung der Komponenten C und D, wobei es erforderlich ist, dass

der Adsorber oder Absorber gemäß Komponente C von der Brönsted-sauren Verbindung gemäß Komponente D benetzt wird. Optional kann zur Erzielung einer Benetzbarkeit die Brönsted-saure Verbindung gemäß Komponente D in einem geeigneten anorganischen oder organischen Lösungsmittel gelöst werden oder aber mit einer anorganischen oder organischen Flüssigkeit abgemischt werden. Als bevorzugtes Lösungsmittel kommt hierbei Wasser zum Einsatz.

Wird die Komponente D zur Erzielung einer besseren Benetzung der Komponente C in Form einer Lösung auf die Komponente C aufgebracht, so beziehen sich die zuvor genannten Mengen der Komponente D auf die reine Säure ohne das Lösungsmittel.

Die Abmischungen der Brönsted-sauren Verbindung gemäß Komponente D oder der Lösung der Brönsted-sauren Verbindung gemäß Komponente D mit dem Adsorber oder Absorber gemäß Komponente C sind in bevorzugter Ausführungsform pulverförmig und rieselfähig.

Unter "Pulver" oder "pulverförmig" im Sinne der Erfindung wird eine Komponente oder eine Mischung aus mehreren Komponenten verstanden, die im festen Aggregatszustand vorliegt und bei denen die Partikel Teilchengrößen von kleiner als 2 mm, bevorzugt von kleiner als 1 mm, insbesondere von kleiner als 0,5 mm aufweisen.

**Komponente A**

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

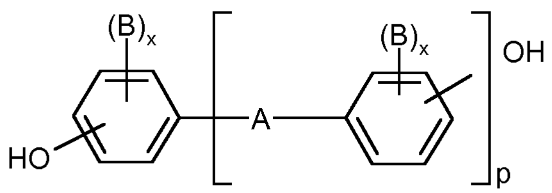

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

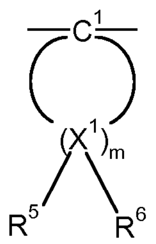

(II)

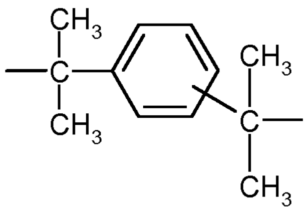

(III)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$ Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha$,$\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000, weiter bevorzugt im Bereich von 20.000 bis 33.000, besonders bevorzugt 23.000 bis 30.000, bestimmt durch GPC (Gelpermeationschromatographie in Methylenchlorid mit Polycarbonat als Standard).

Die erfindungsgemäß als Komponente A in Frage kommenden aromatischen Polyester sind in bevorzugter Ausführungsform Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Besonders bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-ß-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

**Komponente B**

Bei der Komponente B handelt es sich um kautschukmodifizierte Pfropfpolymerisate B.1 oder um kautschukfreie Vinyl(Co)Polymerisate B.2 oder um eine Mischung mehrerer solcher Polymerisate.

Als Komponente B zum Einsatz kommende kautschukmodifizierte Pfropfpolymerisate B.1 umfassen

B.1.1 5 bis 95, vorzugsweise 15 bis 92, insbesondere 25 bis 60 Gew.-%, bezogen auf Komponente B.1, wenigstens eines Vinylmonomeren auf

B.1.2 95 bis 5, vorzugsweise 85 bis 8, insbesondere 75 bis 40 Gew.-%, bezogen auf Komponente B.1, einer oder mehrerer kautschukartiger Pfropfgrundlagen, vorzugsweise mit Glasübergangstemperaturen < 10°C, weiter bevorzugt < 0°C, besonders bevorzugt < -20°C.

Die Glasübergangstemperatur wird mittels dynamischer Differenzkalorimetrie (DSC) gemäß der Norm DIN EN 61006 bei einer Heizrate von 10 K/min mit Definition der Tg als Mittelpunkttemperatur (Tangentenmethode) bestimmt.

Die Pfropfgrundlage B.1.2 hat im allgemeinen eine mittlere Teilchengröße ($d_{50}$-Wert) von 0,05 bis 10 μm, vorzugsweise 0,1 bis 5 μm, besonders bevorzugt 0,2 bis 1 μm.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere B.1.1 sind vorzugsweise Gemische aus

B.1.1.1 50 bis 99, bevorzugt 60 bis 80, insbesondere 70 bis 80 Gew.-Teile, bezogen auf B.1.1, Vinylaromaten und/oder kernsubstituierten Vinylaromaten (wie Styrol, α-Methylstyrol, p-Methylstyrol, p-Chlorstyrol) und/oder Methacrylsäure-($C_1$-$C_8$)-Alkylester, wie Methylmethacrylat, Ethylmethacrylat), und

B.1.1.2 1 bis 50, bevorzugt 20 bis 40, insbesondere 20 bis 30 Gew.-Teilen, bezogen auf B.1.1, Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1.1 und B.1.1.2).

Besonders bevorzugt als Pfropfgrundlage B.1.2 ist reiner Polybutadienkautschuk.

Besonders bevorzugte Polymerisate B.1 sind beispielsweise ABS- oder MBS-Polymerisate, wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1 werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Der Gelanteil der Pfropfgrundlage B.1.2 beträgt mindestens 30 Gew.-%, vorzugsweise mindestens 40 Gew.-%, insbesondere mindestens 60 Gew.-%, jeweils bezogen auf B.1.2 und gemessen als unlöslicher Anteil in Toluol.

Der Gelgehalt der Pfropfgrundlage B.1.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage B.1.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Bei den kautschukfreien Vinyl(Co)Polymerisaten gemäß Komponente B.2 handelt es sich vorzugsweise um kautschukfreie Homo- und/oder Copolymerisate von mindestens einem Monomeren aus der Gruppe der Vinylaromaten, Vinylcyanide (ungesättigte Nitrile), (Meth)Acrylsäure-($C_1$ bis $C_8$)-Alkylester, ungesättigten Carbonsäuren sowie Derivaten (wie Anhydride und Imide) ungesättigter Carbonsäuren.

Insbesondere geeignet sind (Co)Polymerisate B.2 aus

B.2.1 50 bis 99 Gew.-%, bevorzugt 60 bis 80 Gew.-%, insbesondere 70 bis 80 Gew.-%, jeweils bezogen auf das Gesamtgewicht des (Co)Polymerisats B.2, mindestens eines Monomeren ausgewählt aus der Gruppe der Vinylaromaten, wie beispielsweise Styrol, $\alpha$-Methylstyrol, kernsubstituierten Vinylaromaten, wie beispielsweise p-Methylstyrol, p-Chlorstyrol, und (Meth)Acrylsäure-($C_1$-$C_8$)-Alkylester, wie beispielsweise Methylmethacrylat, n-Butylacrylat, tert.-Butylacrylat, und

B.2.2 1 bis 50 Gew.-%, bevorzugt 20 bis 40 Gew.-%, insbesondere 20 bis 30 Gew.-%, jeweils bezogen auf das Gesamtgewicht des (Co)Polymerisats B.2, mindestens eines Monomeren ausgewählt aus der Gruppe der Vinylcyanide, wie beispielsweise ungesättigte Nitrile wie z.B. Acrylnitril und Methacrylnitril, (Meth)Acrylsäu-

re-($C_1$-$C_8$)-Alkylester, wie beispielsweise Methylmethacrylat, n-Butylacrylat, tert.-Butylacrylat, ungesättigte Carbonsäuren und Derivate ungesättigter Carbonsäuren, wie beispielsweise Maleinsäureanhydrid und N-Phenyl-Maleinimid.

Diese (Co)Polymerisate B.2 sind harzartig, thermoplastisch und kautschukfrei. Besonders bevorzugt ist das Copolymerisat aus B.2.1 Styrol und B.2.2 Acrylnitril.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte $M_w$ (Gewichtsmittel, ermittelt durch GPC mit Polystyrol als Standard) zwischen 15.000 und 250.000 g/mol, bevorzugt im Bereich 80.000 bis 150.000 g/mol

**Komponente C**

Als Komponente C kommt mindestens ein adsorptionsfähiges oder absorptionsfähiges Material ausgewählt aus der Gruppe, die thermisch inertes anorganische Materialien sowie Oxide oder Mischoxide, Silikate, Sulfide, Nitride von Metallen beziehungsweise Übergangsmetallen sowie Mischungen daraus umfasst,. zum Einsatz.

In bevorzugter Ausführungsform handelt es sich bei Komponente C um feinteilige und/oder poröse Materialien mit großer äußerer und/oder interner Oberfläche.

In einer bevorzugten Ausführungsform handelt es sich bei Komponente C um feinteilige und/oder mikroporöse Kieselsäuren beziehungsweise Siliziumoxide oder Silikate natürlichen oder synthetischen Ursprungs.

Als feinteiliges Siliziumoxid natürlichen Ursprungs kommt als erfindungsgemäße Komponente C beispielsweise Kieselgur in Frage. Dabei handelt es sich um eine weißliche, pulverförmige Substanz, die hauptsächlich aus den Siliziumdioxidschalen fossiler Kieselalgen (Diatomeen) besteht. Die Schalen bestehen zum größten Teil aus amorphen (nicht kristallinem) Siliziumdioxid (SiO2) und weisen eine stark poröse Struktur auf.

Als Komponente C synthetischen Ursprungs werden in einer bevorzugten Ausführungsform Fällungskieselsäuren und Silikate sowie pyrogene Kieselsäuren verwendet.

Synthetisch hergestellte Fällungskieselsäuren (Kieselgele) und Silikate sind feinteilige, lockere, weiße Pulver, die für spezielle Anwendungen auch in Granulatform erhältlich sind. Ihre Teilchen sind amorph. Chemisch bestehen diese Kieselsäuren und Silikate bis zu etwa 99 Prozent aus Siliziumdioxid (SiO2).

Ausgangsmaterial für die Gewinnung von Kieselsäure auf nassem Wege sind Alkalisilikatlösungen, vorzugsweise Natronwasserglas, aus denen durch Zusatz von Säure amorphe Kieselsäure ausgefällt wird. Nach dem Filtrieren, Waschen und Trocknen besteht das gefällte Produkt zu 86-88% aus SiO2 und zu 10-12% aus Wasser, das sowohl im Molekülverband als auch an der Oberfläche physikalisch gebunden ist.

Metallsilikate wie Calciumsilikat und Aluminiumsilikat erhält man, indem man die bei der Fällung verwendete Säure ganz oder teilweise durch Metallsalze ersetzt, die mit Wasserglas schwer lösliche Niederschläge bilden.

Die ausgefällte Kieselsäuresuspension wird in Filterpressen überführt, in denen die bei der Fällung entstandenen Salze ausgewaschen werden und so viel Wasser wie möglich entfernt wird. Der Filterkuchen enthält noch erhebliche Wassermengen, die bei der anschließenden Trocknung verdampft werden. Die Trocknung erfolgt nach unterschiedlichen Verfahren, je nachdem, welche Eigenschaften für das Kieselsäureprodukt angestrebt werden. Häufig folgen noch Mahl-, Sicht- und/oder Granulationsschritte.

Ein alternatives Verfahren zur Herstellung als Komponente C geeigneter feinteiliger Siliziumoxide ist die Flammenhydrolyse von Siliziumtetrachlorid (SiCl4) oder anderen flüchtigen Chlorsilanen in einer Wasserstoff-Sauerstoff-Flamme ("Aerosil-Verfahren"). Bei diesem Verfahren entstehen die sogenannte pyrogenen Kieselsäuren mit Primärpartikeldurchmessern von im Allgemeinen etwa 5-50 nm und mit spezifischen Oberflächen von im allgemeinen etwa 30-600 $m^2$/g. Durch Variation der Konzentration der Reaktionspartner, der Flammentemperatur und der Verweilzeit der Kieselsäure im Verbrennungsraum können die Teilchengrößen, die Teilchengrößenverteilung, die spezifische Oberflächen und die Oberflächenbeschaffenheit der pyrogenen Kieselsäuren beeinflusst werden.

In der Flamme verschmelzen die Primärteilchen zu größeren Einheiten (Aggregaten) von 100 bis 1000 nm Durchmesser, welche beim Abkühlen wiederum flockige mesoporöse Tertiärstrukturen (Agglomerate) mit einem Durchmesser von etwa 1 bis 250 $\mu$m ausbilden.

In besonders bevorzugter Ausführungsform kommen als Komponente C Fällungskieselsäuren zum Einsatz. Diese können eine hydrophile Oberfläche aufweisen oder nach Oberflächenmodifikation mit organischen Molekülen hydrophobiert vorliegen.

Da in einer besonders bevorzugten Ausführungsform Komponente D hydrophiler Natur ist und bevorzugt als wässrige Lösung zum Einsatz kommt, empfiehlt sich in diesem speziellen Fall die Verwendung einer hydrophilen Fällungskieselsäure als Komponente C.

In speziellen Fällen kann es jedoch auch von Vorteil sein, zur Erzielung einer optimalen Benetzung von Komponente C durch Komponente D eine Fällungskieselsäure mit hydrophobierter Oberfläche einzusetzen.

Die in der bevorzugten Ausführungsform als Komponente C zum Einsatz kommenden Fällungskieselsäuren weisen bevorzugt eine spezifische BET-Oberfläche bestimmt durch Stickstoffadsorption gemäß ISO 5794-1 von 150 bis 600 $m^2/g$, insbesondere von 300 bis 600 m2/g auf. Sie weisen darüber hinaus eine Ölabsorptionszahl gemessen per Absorption von Dibutylphthalat (DBP) gemäß DIN 53601 von bevorzugt 150 bis 500 g/100 g, insbesondere von 300-400 g/100 g auf. Die bevorzugt zum Einsatz kommenden hydrophilen Fällungskieselsäuren weisen weiter bevorzugt einen pH-Wert gemessen gemäß ISO 787-9 an einer 5 Gew.-%igen Suspension der Kieselsäure in Wasser im sauren Bereich (d.h. <7), insbesondere im Bereich 6 bis 7 auf.

**Komponente D**

Als Komponente D kommt mindestens eine beliebige Brönstedt-saure Verbindung zum Einsatz.

In einer bevorzugten Ausführungsform wird Komponente D in einer Lösung in einem anorganischen oder organischen Lösungsmittel, vorzugsweise Wasser, auf den Träger C aufgezogen.

Die Brönstedt-saure Verbindung kommt in der Lösung bevorzugt in einer Konzentration von 0,2 bis 90 Gew.-%, bevorzugt von 1 bis 90 Gew.-%, besonders bevorzugt von 10 bis 90 Gew.-%, insbesondere von 50 bis 90 Gew.-%, jeweils bezogen auf die Lösung, das heißt bezogen auf die Summe aus Komponente D und dem Lösungsmittel, zum Einsatz.

Bei Säuren, die in Lösung eingesetzt werden, berechnet sich der Anteil der Komponente D als reine Säure ohne Lösungsmittel.

Bevorzugt ist die Brönstedt-saure Verbindung eine anorganische Säure, weiter bevorzugt eine phosphorsaure Verbindung, d.h. eine Verbindung mit mindestens einer POH-Funktionalität.

Beispiele solcher Verbindungen sind

- ortho-Phosphorsäure $P(O)(OH)_3$,
- phosphorige Säure $HP(O)(OH)_2$,
- hypophosphorige Säure $H_2P(O)(OH)$,
- Organophosphorverbindungen der phosphorigen und hypophosphorigen Säure mit der allgemeinen Formel $RP(O)(OH)_2$, R(H)P(O)(OH) und R(R')P(O)(OH), wobei R und R' unabhängig voneinander für einen beliebigen gegebenenfalls substituierten Alkyl-, Aryl- oder Alkylaryl-Rest stehen, sowie zyklische oder lineare oligomere oder polymere Verbindungen, saure Salze sowie saure Teilester der zuvor genannten Verbindungen. Besonders bevorzugt sind R und R' unabhängig voneinander ausgewählt aus der Gruppe, die Methyl-, Ethyl-, Propyl-, Isopropyl-, Butyl-, Isobutyl-, und tert-Butyl-Reste umfaßt.

In bevorzugter Ausführungsform handelt es sich um eine Brönstedt-saure Phosphorverbindung, in der der Phosphor die Oxidationsstufe +3 oder +5 besitzt. Besonders bevorzugt ist die Oxidationsstufe +5.

Als besonders bevorzugte Brönstedt-saure Phosphorverbindungen eignen sich beispielsweise ortho-Phosphorsäure, meta-Phosphorsäure, Oligo- und Polyphosphorsäuren, phosphorige Säure, Methylphosphonsäure CH3P(O)(OH)2, saure Salze der zuvor genannten Verbindungen mit ein- und/oder zweiwertigen Metallkationen wie beispielsweise NaH2PO4, Na2HPO4, KH2PO4, K2HPO4, MgO,5H2PO4, MgHPO4, Ca0,5H2PO4, CaHPO4, Zn0,5H2PO4, ZnHPO4, NaH2PO3, KH2PO3, Mg0,5H2PO3,Ca0,5H2PO3, Zn0,5H2PO3 sowie Teilester der zuvor genannten Verbindungen wie beispielsweise P(O)(OH)(OR)(OR'), P(O)(OH)2(OR), HP(O)(OH)(OR) und CH3P(O)(OH)(OR), wobei R, R' wie oben definiert sind.

In bevorzugter Ausführungsform handelt es sich bei der Brönstedt-sauren Phosphorverbindung um ortho-Phosphorsäure oder phosphorige Säure, in besonders bevorzugter Ausführungsform um ortho-Phosphorsäure, die bevorzugt als konzentrierte Phosphorsäure eingesetzt wird.

**Komponente E**

Die Zusammensetzung kann als Komponente E handelsübliche Polymeradditive enthalten.

Als handelsübliche Polymeradditive gemäß Komponente E kommen Additive verschieden von Komponenten C und D, wie beispielsweise Flammschutzmittel (beispielsweise Phosphor- oder Halogenverbindungen), Flammschutzsynergisten , rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl(co)polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/Licht-Stabilisatoren, Thermostabilisatoren, Antioxidantien, Umesterungsinhibitoren, Hydrolyseschutzmittel), antibakteriell wirkende Additive (beispielsweise Silber oder Silbersalze), kratzfestigkeitsverbessernde Additive (beispielsweise Silikonöle oder harte Füllstoffe wie Keramik(hohl)kugeln), IR-Absorbentien, optische Aufheller, fluoreszierende Additive, Füll- und Verstärkungsstoffe anders als Komponente F (z.B. gemahlene Glas- oder Karbonfasern, Glas- oder Keramik(hohl)kugeln, Glimmer, Kaolin, $CaCO_3$ und Glasschuppen) sowie Farbstoffe und Pigmente (beispielsweise Ruß, Titandioxid oder Eisenoxid), oder aber Mischungen mehrerer der genannten Additive in Frage.

Als Flammschutzmittel gemäß Komponente E werden bevorzugt phosphorhaltige Verbindungen eingesetzt. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (IV)

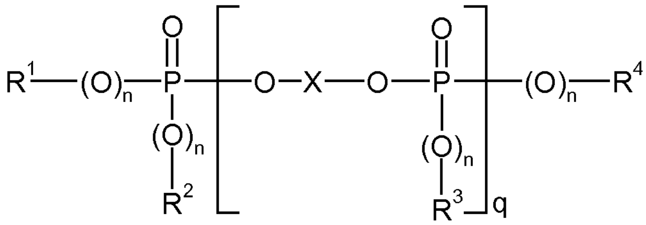

(IV)

worin

| | |
|---|---|
| $R^1$, $R^2$, $R^3$ und $R^4$, | unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl, |
| n | unabhängig voneinander, 0 oder 1, |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten. |

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,1 bis 1,6.

X steht besonders bevorzugt für

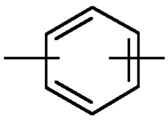 , 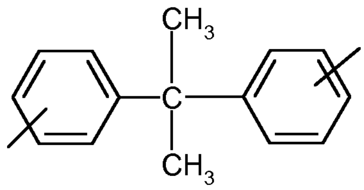 , 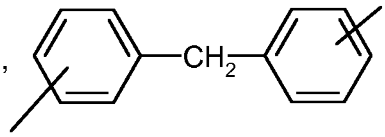 ,

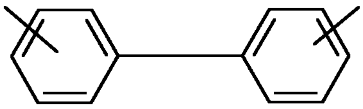 , 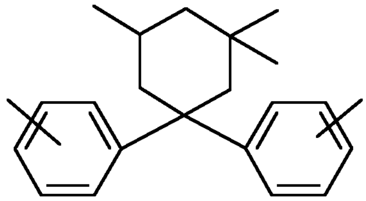

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente F können auch Mischungen verschiedener Phosphate eingesetzt werden.

Phosphorverbindungen der Formel (IV) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (IV), die sich vom Bisphenol A ableiten, ist insbesondere bevorzugt.

Höchst bevorzugt als Komponente F ist Bisphenol-A basierendes Oligophosphat gemäß Formel (IVa).

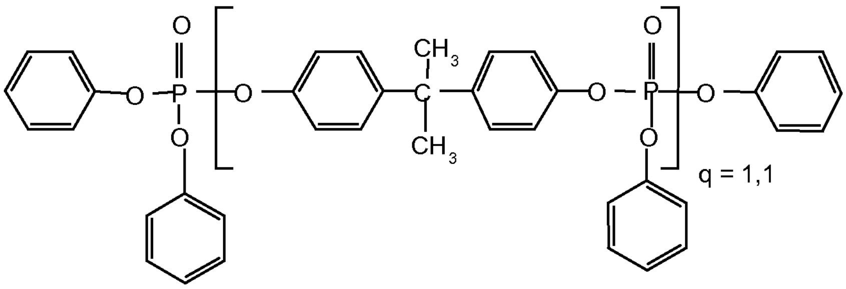

q = 1,1 (IVa)

Die Phosphorverbindungen gemäß Komponente F sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

Die Flammschutzmittel werden in bevorzugter Ausführungsform in Kombination mit Polytetrafluorethylen (PTFE) als Antidrippingmittel eingesetzt.

**Komponente F**

Als Komponente F kommt optional natürlich vorkommender oder synthetisch hergestellter Talk als Füllstoff zum Einsatz.

Reiner Talk hat die chemische Zusammensetzung 3 MgO·4 $SiO_2$·$H_2O$ und somit einen MgO-Gehalt von 31,9 Gew. %, einen SiO2 Gehalt von 63,4 Gew. % und einen Gehalt an chemisch gebundenem Wasser von 4,8 Gew. %. Es

handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Als Komponente F kommen bevorzugt solche Talktypen mit besonders hoher Reinheit zum Einsatz. Diese sind gekennzeichnet durch einen MgO-Gehalt von 28 bis 35 Gew. %, bevorzugt 30 bis 33 Gew. %, besonders bevorzugt 30,5 bis 32 Gew.-% und einen SiO2 Gehalt von 55 bis 65 Gew. %, bevorzugt 58 bis 64 Gew. %, besonders bevorzugt 60 bis 62,5 Gew.-%. Besonders bevorzugte Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz des Talkes in Form von feinvermahlenen Typen mit einer mittleren Partikeldurchmesser d50 von <10 $\mu$m, bevorzugt <5 $\mu$m, besonders bevorzugt <2 $\mu$m, ganz besonders bevorzugt <1,5 $\mu$m.

Der Talk kann oberflächenbehandelt, z.B. silanisiert sein, um eine bessere Verträglichkeit mit dem Polymer zu gewährleisten.

Im Hinblick auf die Verarbeitung und Herstellung der Formmassen ist der Einsatz kompaktierter Talks vorteilhaft.

Die vorliegende Erfindung betrifft ferner ein Verfahren zur Herstellung der erfindungsgemäßen Polycarbonatzusammensetzungen, dadurch gekennzeichnet, daß

1. in einem ersten Verfahrenschritt die Komponente C mit der die Komponente C benetzenden Komponente D vermischt und so die Komponente D auf Komponente C aufgezogen wird,
2. in einem zweiten, nachfolgenden Verfahrensschritt die in Pulverform vorliegende Mischung der Komponenten C und D mit den weiteren Komponenten der Zusammensetzung in einem Compoundierungsaggregat, vorzugsweise einem gegenläufigen Zweiwellenextruder, vorzugsweise unter den üblichen, bekannten Bedingungen zur Herstellung von Polycarbonatblends compoundiert wird.

In einer weiter bevorzugten Ausführungsform werden zunächst in einem Zwischenschritt die pulverförmigen Komponenten B, E und optional F, oder Anteile davon, mit der zuvor hergestellten pulverförmigen Abmischung aus den Komponenten C und D zunächst mechanisch vorgemischt und die so hergestellten pulverförmigen, rieselfähigen Mischungen dem Compoundierungsaggregat mit den weiteren Komponenten zugeführt.

In einer bevorzugten Ausführungsform wird zunächst eine Lösung der Komponente D in einem organischen oder anorganischen Lösungsmittel, vorzugsweise in Wasser, hergestellt, und diese Lösung in Schritt 1 mit der Komponente C vermischt.

In einer weiter bevorzugten Ausführungsform wird in einer Entgasungszone des Compoundieraggregats das Lösungsmittel, welches der Zusammensetzung durch die Lösung der sauren Verbindung gemäß Komponente D zugesetzt wurde, durch Anlegen eines Unterdrucks wieder entfernt.

Ferner betrifft die vorliegende Erfindung die Verwendung von auf Komponente C aufgezogenen Brönstedt-Säuren gemäß Komponente D zur thermischen Stabilisierung basisch verunreinigter Polymermischungen enthaltend mindestens ein Polymer hergestellt durch Polykondensation bei der Compoundierung und thermischen Formgebung.

## Beispiele

### Komponente A

Lineares Polycarbonat auf Basis Bisphenol-A mit einem gewichtsgemitteltem Molekulargewicht Mw von 28000 g/mol (bestimmt durch Gelpermeationschromatographie (GPC) in Methylchlorid als Lösungsmittel und mit Polycarbonat als Standard).

### Komponente B

ABS-Abmischung mit einem Verhältnis von Acrylnitril : Butadien : Styrol, bezogen auf die Abmischung, von 20 : 19 : 61 Gew.-%, enthaltend ein in Emulsionspolymerisation hergestelltes, in basischem Milieu aufgearbeitetes ABS-Polymerisat, ein in Massepolymerisation hergestelltes ABS-Polymerisat und ein SAN-Polymerisat.

### Komponente C

Hydrophiles Silica-Pulver mit einer spezifischen BET-Oberfläche gemessen mit Stickstoff gemäß ISO 5794-1 von 475 $m^2$/g, einem pH-Wert gemessen in 5%iger wässriger Suspension gemäß ISO 787-9 von 6, und einer Ölabsorptionszahl gemessen mit Dibutylphthalat (DBP) gemäß DIN 53601 von 335 g/100 g.

**Komponente D**

Konzentrierte wässrige Phosphorsäure mit einer Konzentration an $H_3PO_4$ von 85 Gew.-%.

**Komponente E1**

Pentaerythrittetrastearat als Gleit-/Entformungsmittel

**Komponente E2**

Thermostabilisator, Irganox® B900 (Gemisch aus 80% Irgafos® 168 und 20% Irganox® 1076; BASF AG; Ludwigshafen / Irgafos® 168 (Tris(2,4-di-tert-butyl-phenyl)-phosphit) / Irganox® 1076 (2,6-Di-tert-butyl-4-(octadecanoxycarbonylethyl)-phenol) (Ludwigshafen, Deutschland)

**Komponente E3**

Thermostabilisator, Irganox 1076 (2,6-Di-tert-butyl-4-(octadecanoxycarbonylethyl)-phenol), BASF (Ludwigshafen, Deutschland)

**Herstellung der Formmassen**

Zunächst wurden Komponenten C und D unter Rühren miteinander gemischt, wobei ein rieselfähiges Pulver resultierte.

Die pulverförmigen Komponenten B, E1 bis E3 wurden mit der zuvor hergestellten pulverförmigen Abmischung aus den Komponenten C und D zunächst mechanisch vorgemischt. Die so hergestellten Mischungen waren pulverförmig und rieselfähig.

In einem weiteren Verfahrensschritt wurden die so hergestellten Pulvermischungen über einen separaten Dosiertrichter gemeinsam mit den ebenfalls über separate Dosiertrichter dosierten Komponenten A und B in die Einzugszone eines ZSK25-Zweiwellenextruders der Fa. Coperion GmbH (Stuttgart, Deutschland) gegeben.

Die resultierende Mischung wurde in der Aufschmelze- und Knetzone des Extruders auf eine Temperatur von 260°C gebracht, aufgeschmolzen, und bei dieser Temperatur geknetet und dadurch die plastifizierten Komponenten ineinander dispergiert.

Die so compoundierte Mischung wurde in der folgenden Entgasungszone des Extruders durch Anlegen eines Unterdrucks von 100 mbar (absolut) an die Schmelze entgast und dadurch das über die Komponente D in die Mischung eingebrachte Wasser aus der Polymerlegierung wieder entfernt.

Die entgaste Schmelze wurde danach über eine Düse aus dem Extruder ausgetragen, der resultierende Schmelzestrang zur Abkühlung durch ein auf ca. 30°C temperiertes Wasserbad geführt und der erstarrte Polymerstrang nachfolgend mittels eines Stranggranulators granuliert.

**Herstellung der Prüfkörper und Prüfung**

Die aus der jeweiligen Compoundierung resultierenden Granulate wurden auf einer Spritzgussmaschine (Fa. Arburg) bei einer Schmelzetemperatur von 260°C bzw. 300°C und einer Werkzeugtemperatur von 80°C zu Probekörpern der Abmessung 80 mm x 10 mm x 4 mm, bzw. 60 mm x 40 mm x 2 mm verarbeitet.

Der **iMVR** dient als Maß für den bei erhöhten Verarbeitungstemperaturen zu erwartenden Polycarbonatmolekulargewichtsabbau und somit die **Thermostabilität** der Zusammensetzung und wird bestimmt nach ISO1133 bei einer Schmelzetemperatur von 300°C mit einer Stempellast von 5 kg nach einer Haltezeit bei dieser Temperatur von 300°C von 15 min.

Der **Rohton / die Eigenfarbe** wird in Reflexion gemessen gemäß DIN 6174 an Plättchen der Abmessung 60 mm x 40 mm x 2 mm, welche bei einer Schmelzetemperatur von 260°C im Spritzguss hergestellt wurden. Der Yellowness-Index YI wird nach ASTM E313 berechnet.

Der **Glanzgrad** wird ermittelt an Plättchen der Abmessung 60 mm x 40 mm x 2 mm, welche bei einer Schmelzetemperatur von 260°C bzw. 300°C im Spritzguss hergestellt wurden. Die Messung erfolgt in Reflexion bei Messwinkeln von 20° und 60° gemäß DIN 67530.

Als Maß für die Verarbeitungsstabilität dient die relative Änderung der bei 20° bzw. 60° Messwinkel gemessenen Glanzgrade bei einer Erhöhung der Schmelzetemperatur im Spritzguss von 260°C auf 300°C, welche berechnet wird

gemäß:

Glanzgradänderung (260°C→300°C) = 100% ▪(Glanzgrad bei 300°C – Glanzgrad bei 260°C)/Glanzgrad bei 260°C.

Die Glanzgradänderung wird getrennt für die beiden Messwinkel ermittelt.

**Tabelle 1**

| **Einsatzstoff** | **V1** | **V2** | **1** | **V3** |
|---|---|---|---|---|
| A | 60,35 | 60,35 | 60,35 | 60,35 |
| B | 38,59 | 38,59 | 38,59 | 38,59 |
| E1 | 0,74 | 0,74 | 0,74 | 0,74 |
| E2 | 0,12 | 0,12 | 0,12 | 0,12 |
| E3 | 0,20 | 0,20 | 0,20 | 0,20 |
| D | - | 0,012 | 0,012 | 0,40 |
| C | - | - | 0,003 | 0,10 |
| **Prüfung** | | | | |
| iMVR (300°C/15min) [ml/10min] | 120 | 59 | 52 | >>200* |
| Yellowness Index (260°C) | 10,7 | 17,1 | 15,5 | 32,1 |
| Glanzgrad (20°/260°C) | 95,2 | 94,0 | 94,3 | 79,3 |
| Glanzgrad (60°/260°C) | 101,0 | 100,0 | 100,0 | 95,5 |
| Glanzgrad (20°/300°C) | 66,4 | 66,5 | 75,7 | 45,8 |
| Glanzgrad (60°/300°C) | 92,2 | 91,6 | 96,3 | 78,1 |
| Glanzgradänderung 260°C --> 300°C (20°) [%] | -30,3 | -29,3 | -19,7 | -42,2 |
| Glanzgradreduktion 260°C --> 300°C (60°) [%] | -8,7 | -8,4 | -3,7 | -18,2 |

Den Daten in Tabelle 1 ist zu entnehmen, dass die erfindungsgemäße Zusammensetzung (Beispiel 1) eine gegenüber den drei Vergleichsbeispielen verbesserte Verarbeitungsstabilität im Sinne der Stabilität des Glanzgrades über die Verarbeitungstemperatur aufweist. Gegenüber dem Vergleichsbeispiel 1, welches weder phosphorsaure Verbindung C noch Silica D enthält, zeigt die erfindungsgemäße Zusammensetzung gemäß Beispiel 1 darüber hinaus eine deutliche Verbesserung der Thermostabilität im Sinne des Abbaus des Polycarbonatmolekulargewichtes bei erhöhten Verarbeitungstemperaturen. Durch Zusatz der phosphorsauren Verbindung C allein (Vergleichsbeispiel 2) läßt sich dieser Defekt zwar weitgehend beheben, nicht jedoch die mangelhafte Verarbeitungsstabilität im Sinne der Stabilität des Glanzgrades über die Verarbeitungstemperatur. Des Weiteren weist Vergleichsbeispiel 2 gegenüber der erfindungsgemäßen Zusammensetzung (Beispiel 1) einen verschlechterten Rohton auf. Der Vergleich von erfindungsgemäßem Beispiel 1 mit Vergleichsbeispiel V3, in dem die Abmischung aus phosphorsaurer Verbindung C und Silica D in gegenüber Beispiel 1 erhöhter Konzentration zum Einsatz gebracht wurde, zeigt, dass die erwünschte Eigenschaftskombination nur dann erreicht wird, wenn die Gesamtmenge an Phosphorsäure und Silica beschränkt ist. Bei höheren Konzentrationen (Vergleichsbeispiel 3) dreht sich der positive Effekt des Zusatzes der Abmischung aus phosphorsaurer Verbindung und Silica um, das heißt es wird eine Verschlechterung von Thermostabilität (Abbau des Polycarbonatmolekulargewichtes), Verarbeitungsstabilität (Stabilität des Glanzgrades über die Verarbeitungstemperatur) und Rohton (Yellowness Index) beobachtet.

**Patentansprüche**

1. Verfahren zur Herstellung von Polymerzusammensetzungen enthaltend

A) 10 bis 100 Gew.-Teile, bezogen auf die Summe der Komponenten A+B, mindestens eines Polymers ausgewählt aus der Gruppe der aromatischen Polycarbonate, aromatischen Polyestercarbonate und aromatischen Polyester,
B) 0 bis 90 Gew.-Teile, bezogen auf die Summe der Komponenten A+B, mindestens eines gegebenenfalls kautschukmodifizierten Vinyl(co)polymerisats,
C) 0,00025 bis 0,080 Gew.-Teile, bezogen auf die Summe der Komponenten A+B, mindestens eines anorganischen Adsorbers bzw. Absorbers ausgewählt aus der Gruppe, die thermisch inerte anorganische Materialien, sowie Oxide, Mischoxide, Silikate, Sulfide, Nitride von Metallen oder Übergangsmetallen sowie Mischungen daraus umfasst,
D) 0,001 bis 0,300 Gew.-Teile, bezogen auf die Summe der Komponenten A+B, mindestens einer Brönsted-sauren Verbindung,
E) 0,1 bis 40,0 Gew.-Teile, bezogen auf die Summe der Komponenten A+B, mindestens eines Zusatzstoffes verschieden von den Komponenten C, D und F,
F) 0 bis 50 Gew.-Teile, bezogen auf die Summe der Komponenten A+B, Talk,

wobei die Summe der Gewichtsteile der Komponenten A+B in der Zusammensetzung 100 ergibt,
umfassend die Schritte

- Mischung der Komponente C mit der Komponente D, wobei die Komponente D die Komponente C benetzt,
- Compoundierung der in Pulverform vorliegenden Mischung der Komponenten C und D mit den weiteren Komponenten der Zusammensetzung in einem handelsüblichen Compoundieraggregat.

**2.** Verfahren nach Anspruch 1, **dadurch gekennzeichnet, dass** zunächst eine Lösung der Komponente D in einem organischen oder anorganischen Lösungsmittel hergestellt, und diese Lösung mit der Komponente C vermischt wird, wobei die Lösung der Komponente D die Komponente C benetzt.

**3.** Verfahren nach Anspruch 1 oder 2, **dadurch gekennzeichnet, dass** in einem Zwischenschritt die pulverförmigen Komponenten B, E und optional F, oder Anteile davon, mit der zuvor hergestellten pulverförmigen Abmischung aus den Komponenten C und D oder aus den Komponenten C und der Lösung der Komponente D zunächst mechanisch vorgemischt werden und die so hergestellten pulverförmigen, rieselfähigen Mischungen der Compoundierung mit den weiteren Komponenten zugeführt werden.

**4.** Verfahren nach einem der vorhergehenden Ansprüche, **dadurch gekennzeichnet, dass** in einer Entgasungszone des Compoundieraggregats das Lösungsmittel, welches der Zusammensetzung durch die Lösung der sauren Verbindung D zugesetzt wurde, durch Anlegen eines Unterdrucks wieder enfernt wird.

**5.** Verfahren gemäß Anspruch 1 zur Herstellung von Polymerzusammensetzungen enthaltend
55 bis 65 Gew.-Teile Komponente A,
35 bis 45 Gew.-Teile Komponente B,
0,001 bis 0,010 Gew.-Teile Komponente C,
0,005 bis 0,05 Gew.-Teile Komponente D,
0,3 bis 2,0 Gew.-Teile Komponente E, und
0 bis 50 Gew.-Teile Komponente F,
wobei die Summe der Gewichtsteile der Komponenten A+B in der Zusammensetzung 100 ergibt.

**6.** Polymerzusammensetzungen enthaltend

A) 10 bis 100 Gew.-Teile, bezogen auf die Summe der Komponenten A+B, mindestens eines Polymers ausgewählt aus der Gruppe der aromatischen Polycarbonate, aromatischen Polyestercarbonate und aromatischen Polyester,
B) 0 bis 90 Gew.-Teile, bezogen auf die Summe der Komponenten A+B, mindestens eines gegebenenfalls kautschukmodifizierten Vinyl(co)polymerisats,
C) 0,00025 bis 0,080 Gew.-Teile, bezogen auf die Summe der Komponenten A+B, mindestens eines anorganischen Adsorbers oder Absorbers ausgewählt aus der Gruppe, die thermisch inerte anorganische Materialien, sowie Oxide, Mischoxide, Silikate, Sulfide, Nitride von Metallen oder Übergangsmetallen sowie Mischungen daraus umfasst,
D) 0,001 bis 0,300 Gew.-Teile, bezogen auf die Summe der Komponenten A+B, mindestens einer Brönsted-sauren Verbindung,
E) 0,1 bis 40,0 Gew.-Teile, bezogen auf die Summe der Komponenten A+B, mindestens eines Zusatzstoffes

verschieden von den Komponenten C, D und F, und
F) 0 bis 50 Gew.-Teile, bezogen auf die Summe der Komponenten A+B, Talk,

wobei die Summe der Gewichtsteile der Komponenten A+B in der Zusammensetzung 100 ergibt.

**7.** Polymerzusammensetzungen gemäß Anspruch 6 enthaltend
55 bis 65 Gew.-Teile Komponente A,
35 bis 45 Gew.-Teile Komponente B,
0,001 bis 0,010 Gew.-Teile Komponente C,
0,005 bis 0,05 Gew.-Teile Komponente D,
0,3 bis 2,0 Gew.-Teile Komponente E, und
0 bis 50 Gew.-Teile Komponente F.

**8.** Polymerzusammensetzungen nach einem der Ansprüche 6 bis 7, **dadurch gekennzeichnet, dass** die Komponente D, bezogen auf die Summe der Komponenten C und D, in einem Anteil von mindestens 25 Gew.-Teilen eingesetzt wird.

**9.** Polymerzusammensetzungen nach einem der Ansprüche 6 bis 7, **dadurch gekennzeichnet, dass** die Komponente D, bezogen auf die Summe der Komponenten C und D, in einem Anteil von mindestens 60 Gew.-Teilen eingesetzt wird.

**10.** Polymerzusammensetzungen nach einem der Ansprüche 6 bis 9, **dadurch gekennzeichnet, dass** Komponente C ausgewählt ist aus der Gruppe, die feinteilige und mikroporöse Kieselsäuren, Siliziumoxide und Silikate natürlichen oder synthetischen Ursprungs sowie deren Mischungen umfaßt.

**11.** Polymerzusammensetzungen nach einem der Ansprüche 6 bis 9, **dadurch gekennzeichnet, dass** Komponente C ausgewählt ist aus der Gruppe der Fällungskieselsäuren mit einer spezifischen BET-Oberfläche bestimmt durch Stickstoffadsorption gemäß ISO 5794-1 von 150 bis 600 $m^2/g$, einer Ölabsorptionszahl gemessen per Absorption von Dibutylphthalat gemäß DIN 53601 von 150 bis 500 g/100 g, und einem pH-Wert gemessen gemäß ISO 787-9 an einer 5 Gew.-%igen Suspension der Kieselsäure in Wasser von < 7.

**12.** Polymerzusammensetzungen nach einem der Ansprüche 6 bis 11, **dadurch gekennzeichnet, dass** Komponente D ausgewählt ist aus der Gruppe die Brönstedt-saure Phosphorverbindungen, in der der Phosphor die Oxidationsstufe +3 oder +5 besitzt, umfaßt.

**13.** Verwendung von auf anorganischen Adsorbern bzw. Absorbern gemäß Komponente C aufgezogenen Brönstedtsauren Verbindungen gemäß Komponente D zur thermischen Stabilisierung basisch verunreinigter Polymermischungen enthaltend mindestens ein Polymer hergestellt durch Polykondensation bei der Compoundierung und thermischen Formgebung, wobei die Komponente C ausgewählt ist aus der Gruppe, die thermisch inerte anorganische Materialien, sowie Oxide, Mischoxide, Silikate, Sulfide, Nitride von Metallen oder Übergangsmetallen sowie Mischungen daraus umfasst.

## Claims

**1.** Process for the preparation of polymer compositions comprising

A) from 10 to 100 parts by weight, based on the sum of components A+B, of at least one polymer selected from the group of the aromatic polycarbonates, aromatic polyester carbonates and aromatic polyesters,
B) from 0 to 90 parts by weight, based on the sum of components A+B, of at least one optionally rubber-modified vinyl (co)polymer,
C) from 0.00025 to 0.080 part by weight, based on the sum of components A+B, of at least one inorganic adsorber or absorber selected from the group comprising thermally inert inorganic materials, as well as oxides, mixed oxides, silicates, sulfides, nitrides of metals or transition metals, and mixtures thereof,
D) from 0.001 to 0.300 part by weight, based on the sum of components A+B, of at least one Brönsted-acidic compound,
E) from 0.1 to 40.0 parts by weight, based on the sum of components A+B, of at least one additive other than components C, D and F,

F) from 0 to 50 parts by weight, based on the sum of components A+B, of talc,
wherein the sum of the parts by weight of components A+B in the composition is 100,
comprising the steps

- mixing component C with component D, component D wetting component C,
- compounding the mixture of components C and D in powder form with the further components of the composition in a commercially available compounding unit.

2. Process according to claim 1, **characterised in that** a solution of component D in an organic or inorganic solvent is first prepared, and this solution is mixed with component C, the solution of component D wetting component C.

3. Process according to claim 1 or 2, **characterised in that**, in an intermediate step, the pulverulent components B, E and optionally F, or portions thereof, are first premixed mechanically with the previously prepared pulverulent blend of components C and D or of components C and the solution of component D, and the pulverulent, pourable mixtures so prepared are fed to compounding with the further components.

4. Process according to any one of the preceding claims, **characterised in that**, in a degassing zone of the compounding unit, the solvent added to the composition by the solution of the acidic compound D is removed again by application of a low pressure.

5. Process according to claim 1 for the preparation of polymer compositions comprising
from 55 to 65 parts by weight of component A,
from 35 to 45 parts by weight of component B,
from 0.001 to 0.010 part by weight of component C,
from 0.005 to 0.05 part by weight of component D,
from 0.3 to 2.0 parts by weight of component E, and
from 0 to 50 parts by weight of component F,
wherein the sum of the parts by weight of components A+B in the composition is 100.

6. Polymer compositions comprising

A) from 10 to 100 parts by weight, based on the sum of components A+B, of at least one polymer selected from the group of the aromatic polycarbonates, aromatic polyester carbonates and aromatic polyesters,
B) from 0 to 90 parts by weight, based on the sum of components A+B, of at least one optionally rubber-modified vinyl (co)polymer,
C) from 0.00025 to 0.080 part by weight, based on the sum of components A+B, of at least one inorganic adsorber or absorber selected from the group comprising thermally inert inorganic materials, as well as oxides, mixed oxides, silicates, sulfides, nitrides of metals or transition metals, and mixtures thereof,
D) from 0.001 to 0.300 part by weight, based on the sum of components A+B, of at least one Brönsted-acidic compound,
E) from 0.1 to 40.0 parts by weight, based on the sum of components A+B, of at least one additive other than components C, D and F, and
F) from 0 to 50 parts by weight, based on the sum of components A+B, of talc,

wherein the sum of the parts by weight of components A+B in the composition is 100.

7. Polymer compositions according to claim 6 comprising from 55 to 65 parts by weight of component A,
from 35 to 45 parts by weight of component B,
from 0.001 to 0.010 part by weight of component C,
from 0.005 to 0.05 part by weight of component D,
from 0.3 to 2.0 parts by weight of component E, and
from 0 to 50 parts by weight of component F.

8. Polymer compositions according to either claim 6 or claim 7, **characterised in that** component D, based on the sum of components C and D, is used in an amount of at least 25 parts by weight.

9. Polymer compositions according to either claim 6 or claim 7, **characterised in that** component D, based on the sum of components C and D, is used in an amount of at least 60 parts by weight.

**10.** Polymer compositions according to any one of claims 6 to 9, **characterised in that** component C is selected from the group comprising finely divided and microporous silicas, silicon oxides and silicates of natural or synthetic origin, and mixtures thereof.

**11.** Polymer compositions according to any one of claims 6 to 9, **characterised in that** component C is selected from the group of precipitated silicas having a specific BET surface area, determined by nitrogen adsorption according to ISO 5794-1, of from 150 to 600 m2/g, an oil absorption number, measured by absorption of dibutyl phthalate according to DIN 53601, of from 150 to 500 g/100 g, and a pH value, measured according to ISO 787-9 on a 5 wt.% suspension of the silica in water, of < 7.

**12.** Polymer compositions according to any one of claims 6 to 11, **characterised in that** component D is selected from the group comprising Brönsted-acidic phosphorus compounds in which the phosphorus has oxidation state +3 or +5.

**13.** Use of Brönsted-acidic compounds according to component D applied to inorganic adsorbers or absorbers according to component C for the heat stabilisation of polymer mixtures, containing basic impurities, comprising at least one polymer prepared by polycondensation, during compounding and thermal shaping, wherein component C is selected from the group comprising thermally inert inorganic materials, as well as oxides, mixed oxides, silicates, sulfides, nitrides of metals or transition metals, and mixtures thereof.

## Revendications

**1.** Procédé pour la préparation de compositions polymères, contenant

A) 10 à 100 parties en poids, par rapport à la somme des composants A + B, d'au moins un polymère choisi dans le groupe constitué par les polycarbonates aromatiques, les polyestercarbonates aromatiques et les polyesters aromatiques,
B) 0 à 90 parties en poids, par rapport à la somme des composants A + B, d'au moins un (co)polymère de vinyle le cas échéant modifié par un caoutchouc,
C) 0,00025 à 0,080 partie en poids, par rapport à la somme des composants A + B, d'au moins un adsorbant ou absorbant inorganique choisi dans le groupe comprenant les matériaux inorganiques thermiquement inertes ainsi que les oxydes, les oxydes mixtes, les silicates, les sulfures, les nitrures de métaux ou de métaux de transition ainsi que leurs mélanges,
D) 0,001 à 0,300 partie en poids, par rapport à la somme des composants A + B, d'au moins un composé acide de Brönstedt,
E) 0,1 à 40,0 parties en poids, par rapport à la somme des composants A + B, d'au moins un additif différent des composants C, D et F,
F) 0 à 50 parties en poids, par rapport à la somme des composants A + B, de talc,

la somme des parties en poids des composants A + B dans la composition valant 100,
comprenant les étapes de

- mélange du composant C avec le composant D, le composant D mouillant le composant C
- compoundage du mélange des composants C et D se trouvant sous forme de poudre avec les autres composants de la composition dans un appareil de compoundage usuel du commerce.

**2.** Procédé selon la revendication 1, **caractérisé en ce qu'**on prépare d'abord une solution du composant D dans un solvant organique ou inorganique et on mélange cette solution avec le composant C, la solution du composant D mouillant le composant C.

**3.** Procédé selon la revendication 1 ou 2, **caractérisé en ce que**, dans une étape intermédiaire, les composants B, E et éventuellement F sous forme de poudre, ou des proportions de ceux-ci, sont d'abord prémélangés mécaniquement avec le mélange sous forme de poudre préparé au préalable à partir des composants C et D ou à partir du composant C et de la solution du composant D et les mélanges sous forme de poudre, pouvant s'écouler, ainsi préparés sont introduits dans le compoundage avec les autres composants.

**4.** Procédé selon l'une quelconque des revendications précédentes, **caractérisé en ce que**, dans une zone de dégazage de l'appareil de compoundage, le solvant, qui a été ajouté à la composition par la solution du composé D

acide, est de nouveau éliminé par application d'une dépression.

**5.** Procédé selon la revendication 1 pour la préparation de compositions polymères contenant
55 à 65 parties en poids de composant A,
35 à 45 parties en poids de composant B,
0,001 à 0,010 partie en poids de composant C,
0,005 à 0,05 partie en poids de composant D,
0,3 à 2,0 parties en poids de composant E et
0 à 50 parties en poids de composant F,
la somme des parties en poids des composants A + B dans la composition valant 100.

**6.** Compositions polymères contenant

A) 10 à 100 parties en poids, par rapport à la somme des composants A + B, d'au moins un polymère choisi dans le groupe constitué par les polycarbonates aromatiques, les polyestercarbonates aromatiques et les polyesters aromatiques,
B) 0 à 90 parties en poids, par rapport à la somme des composants A + B, d'au moins un (co)polymère de vinyle le cas échéant modifié par un caoutchouc,
C) 0,00025 à 0,080 partie en poids, par rapport à la somme des composants A + B, d'au moins un adsorbant ou absorbant inorganique choisi dans le groupe comprenant les matériaux inorganiques thermiquement inertes ainsi que les oxydes, les oxydes mixtes, les silicates, les sulfures, les nitrures de métaux ou de métaux de transition ainsi que leurs mélanges,
D) 0,001 à 0,300 partie en poids, par rapport à la somme des composants A + B, d'au moins un composé acide de Brönstedt,
E) 0,1 à 40,0 parties en poids, par rapport à la somme des composants A + B, d'au moins un additif différent des composants C, D et F, et
F) 0 à 50 parties en poids, par rapport à la somme des composants A + B, de talc,

la somme des parties en poids des composants A + B dans la composition valant 100.

**7.** Compositions polymères selon la revendication 6, contenant 55 à 65 parties en poids de composant A,
35 à 45 parties en poids de composant B,
0,001 à 0,010 partie en poids de composant C,
0,005 à 0,05 partie en poids de composant D,
0,3 à 2,0 parties en poids de composant E et
0 à 50 parties en poids de composant F.

**8.** Compositions polymères selon l'une quelconque des revendications 6 à 7, **caractérisées en ce que** le composant D, par rapport à la somme des composants C et D, est utilisé en une proportion d'au moins 25 parties en poids.

**9.** Compositions polymères selon l'une quelconque des revendications 6 à 7, **caractérisées en ce que** le composant D, par rapport à la somme des composants C et D, est utilisé en une proportion d'au moins 60 parties en poids.

**10.** Compositions polymères selon l'une quelconque des revendications 6 à 9, **caractérisées en ce que** le composant C est choisi dans le groupe qui comprend les silices, les oxydes de silicium et les silicates, finement divisés et microporeux, d'origine naturelle ou synthétique ainsi que leurs mélanges.

**11.** Compositions polymères selon l'une quelconque des revendications 6 à 9, **caractérisées en ce que** le composant C est choisi dans le groupe des silices précipitées présentant une surface spécifique BET, déterminée par adsorption d'azote selon la norme ISO 5794-1, de 150 à 600 $m^2/g$, un indice d'absorption d'huile, mesuré par absorption de phtalate de dibutyle selon la norme DIN 53601, de 150 à 500 g/100 g et un pH, mesuré selon la norme ISO 787-9 sur une suspension à 5% en poids de la silice dans l'eau, < 7.

**12.** Compositions polymères selon l'une quelconque des revendications 6 à 11, **caractérisées en ce que** le composant D est choisi dans le groupe qui comprend les composés phosphorés acides de Brönstedt dans lesquels le phosphore présente l'étage d'oxydation +3 ou +5.

**13.** Utilisation de composés acides de Brönstedt selon le composant D appliqués sur des adsorbants ou des absorbants

inorganiques selon le composant C pour la stabilisation thermique de mélanges polymères présentant une contamination basique, contenant au moins un polymère préparé par polycondensation, lors du compoundage et du façonnage thermique, le composant C étant choisi dans le groupe qui comprend les matériaux inorganiques thermiquement inertes ainsi que les oxydes, les oxydes mixtes, les silicates, les sulfures, les nitriles de métaux ou de métaux de transition ainsi que leurs mélanges.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 576950 A1
- WO 2007065579 A
- US 20060287422 A
- WO 2010063381 A
- EP 2257590 A1
- EP 1141107 A1
- EP 0899302 A1
- WO 2008122359 A1
- DE 1495626
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- DE 2407674 A
- DE 2407776
- DE 2715932
- DE 1900270 A
- US 3692744 A
- DE OS2035390 A
- US 3644574 A
- DE 2248242 A
- GB 1409275 A
- US 4937285 A
- DE 3704657
- DE 3704655
- DE 3631540
- DE 3631539
- EP 0363608 A
- EP 0640655 A
- WO 0000541 A
- WO 0118105 A


### In der Beschreibung aufgeführte Nicht-Patentliteratur


- Chemistry and Physics of Polycarbonates. Interscience Publishers, 1964
- Kunststoff-Handbuch. Carl-Hanser-Verlag, 1973, vol. VIII, 695 ff
- **W. SCHOLTAN ; H. LANGE.** *Kolloid, Z. und Z. Polymere,* 1972, vol. 250, 782-1796
- **ULLMANNS.** Enzyklopädie der Technischen Chemie. 1980, vol. 19, 280 ff
- **M. HOFFMANN ; H. KRÖMER ; R. KUHN.** Polymeranalytik. Georg Thieme-Verlag, 1977, vol. I und II
- Ullmanns Enzyklopädie der technischen Chemie. 1979, vol. 18, 301 ff
- **HOUBEN-WEYL.** *Methoden der organischen Chemie,* vol. 12/1, 43
- *Beilstein,* vol. 6, 177